# EUROPEAN PATENT APPLICATION

(11) **EP 3 978 741 A1**
(43) Date of publication of application: **06.04.2022**
(21) Application number: 21201039.1
(22) Date of filing: 05.10.2021
(51) Int. Cl.: F02C 9/54, F02C 6/02, F02C 9/42

(54) **METHOD AND SYSTEM FOR OPERATING A GAS TURBINE ENGINE TO AVOID RESTRICTED ENGINE SPEEDS**

(30) Priority: 05.10.2020 US 202017063188
(71) Applicant: PRATT & WHITNEY CANADA CORP., Longueuil, Québec J4G 1A1 (CA)
(72) Inventor: BEAUCHESNE-MARTEL, Philippe, (01BE5) Longueuil, J4G 1A1 (CA); DROLET, Martin, (01BE5) Longueuil, J4G 1A1 (CA)
(74) Representative: Dehns

(57) **Abstract**

A method of operating a gas turbine engine (102, 104) comprises governing the engine (102, 104) with a primary governing logic (402) to adjust a fuel flow to the engine (102, 104) and governing the engine (102, 104) with at least one complementary governing logic (404) concurrently to the primary governing logic (402), the at least one complementary governing logic (404) adjusting a position of at least one variable geometry mechanism (VGM) (42) of the engine (102, 104) to prevent a rotational speed of the engine (102, 104) from operating in one or more restricted speed range (302).

## Description

### TECHNICAL FIELD

The application relates generally to governing logic for gas turbine engines and, more particularly, to governing logic to avoid restricted engine speeds.

### BACKGROUND OF THE ART

The performance of a gas turbine engine is dependent on many different parameters, with fuel flow typically being the primary parameter through which operation of the engine is controlled. Various techniques for controlling fuel flow may be used in order to govern an engine. While existing engine governing techniques are suitable for certain purposes, improvements are desirable.

### SUMMARY

In one aspect of the invention, there is provided a method for operating a gas turbine engine. The method comprises governing the engine with a primary governing logic to adjust a fuel flow to the engine and governing the engine with at least one complementary governing logic concurrently to the primary governing logic, the at least one complementary governing logic adjusting a position of at least one variable geometry mechanism (VGM) of the engine to prevent a rotational speed of the engine from operating in one or more restricted speed range.

The following optional features may apply to any or all of the aspects:
Optionally, the restricted speed range is defined by an upper limit and a lower limit, and wherein the target speed is set to one of the upper limit and the lower limit.
Optionally, and according to any of the above, the target speed is set to the upper limit of the restricted speed range when an actual speed of the engine is in an upper half of the restricted speed range, and the target speed is set to the lower limit of the restricted speed range when the actual speed is in a lower half of the restricted speed range.
Optionally, and according to any of the above, the at least one complementary governing logic is applied to a low pressure spool of the engine.
Optionally, and according to any of the above, the at least one complementary governing logic comprises a first complementary governing logic applied to a low pressure spool of the engine and a second complementary governing logic applied to a high pressure spool of the engine.
Optionally, and according to any of the above, the gas turbine engine is in an aircraft having two or more engines operated in an asymmetric operating regime, where a first of the engines is in an active mode to provide motive power to the aircraft and a second of the engines is in a standby mode to provide substantially no motive power to the aircraft, and wherein the method is applied when the gas turbine engine is operating in the standby mode.
Optionally, and according to any of the above, the at least one complementary governing logic comprises:
   selecting a target speed outside of the one or more restricted speed range;
   determining an error between an actual speed of the engine and the target speed;
   determining a bias via for the at least one VGM to minimize the error; and
   issuing a command to apply the bias to the at least one VGM.
Optionally, and according to any of the above, the at least one complementary governing logic is invoked when an actual speed of the engine falls within the one or more restricted speed range.
Optionally, and according to any of the above, adjusting the at least one VGM comprises applying a bias to a nominal VGM position schedule.
Optionally, and according to any of the above, the bias is capped at a maximum value.

In another aspect of the invention, there is provided a system for operating a gas turbine engine. The system comprises a processing unit and a non-transitory computer readable medium having stored thereon program code. The program code is executable by the processing unit for governing the engine with a primary governing logic to adjust a fuel flow to the engine and governing the engine with at least one complementary governing logic concurrently to the primary governing logic, the at least one complementary governing logic adjusting a position of at least one variable geometry mechanism (VGM) of the engine to prevent a rotational speed of the engine from operating in one or more restricted speed range.

Optionally, the restricted speed range is defined by an upper limit and a lower limit, and wherein the target speed is set to one of the upper limit and the lower limit.

Optionally, and according to any of the above, the target speed is set to the upper limit of the restricted speed range when an actual speed of the engine is in an upper half of the restricted speed range, and the target speed is set to the lower limit of the restricted speed range when the actual speed is in a lower half of the restricted speed range.

Optionally, and according to any of the above, the at least one complementary governing logic is applied to a low pressure spool of the engine.

Optionally, and according to any of the above, the at least one complementary governing logic comprises a first complementary governing logic applied to a low pressure spool of the engine and a second complementary governing logic applied to a high pressure spool of the engine.

Optionally, and according to any of the above, the gas turbine engine is in an aircraft having two or more engines operated in an asymmetric operating regime, where a first of the engines is in an active mode to provide motive power to the aircraft and a second of the engines is in a standby mode to provide substantially no motive power to the aircraft, and wherein the method is applied when the gas turbine engine is operating in the standby mode.

Optionally, and according to any of the above, the at least one complementary governing logic comprises:
selecting a target speed outside of the one or more restricted speed range;
determining an error between an actual speed of the engine and the target speed;
determining a bias via for the at least one VGM to minimize the error; and
issuing a command to apply the bias to the at least one VGM.

Optionally, and according to any of the above, the at least one complementary governing logic is invoked when an actual speed of the engine falls within the one or more restricted speed range.

Optionally, and according to any of the above, adjusting the at least one VGM comprises applying a bias to a nominal VGM position schedule.

Optionally, and according to any of the above, the bias is capped at a maximum value.

### DESCRIPTION OF THE DRAWINGS

Reference is now made to the accompanying figures in which:
Fig. 1A is a schematic cross-sectional view of a multi-engine aircraft;
Fig. 1B is a schematic representation of an exemplary multi-engine system for the aircraft of Fig. 1A, showing axial cross-sectional views of two gas turbine engines;
Fig. 2 is a schematic axial cross-sectional view of one of the gas turbine engines of Fig. 1B, for the multi-engine aircraft of Fig. 1A;
Fig. 3A is a graphical representation of restricted speed ranges vs variable guide vane positions;
Fig. 3B is a graphical representation of restricted speed ranges vs outside air temperature;
Fig. 4A is flowchart of a method for operating an engine to avoid restricted speed ranges;
Fig. 4B is a flowchart of an example embodiment for governing the engine based on complementary governing logic to avoid restricted speeds;
Fig. 5A is a flowchart of an example embodiment for governing the engine using a primary governing logic to adjust fuel flow;
Fig. 5B is a flowchart of another example embodiment for governing the engine using a primary governing logic to adjust fuel flow; and
Fig. 6 is a block diagram of an example computing device.

### DETAILED DESCRIPTION

There are described herein methods and systems for operating a gas turbine engine to avoid restricted engine speeds. In some cases, but not exclusively, the gas turbine engine is part of an aircraft having two or more engines. Under certain conditions, it can be desirable to operate the aircraft in a so-called "asymmetric operating regime" (AOR) which is described in greater detail hereinbelow. When operated in the AOR, multiple engines of the aircraft, which may be a multi-engine helicopter or other rotorcraft, are operated at different output power levels.

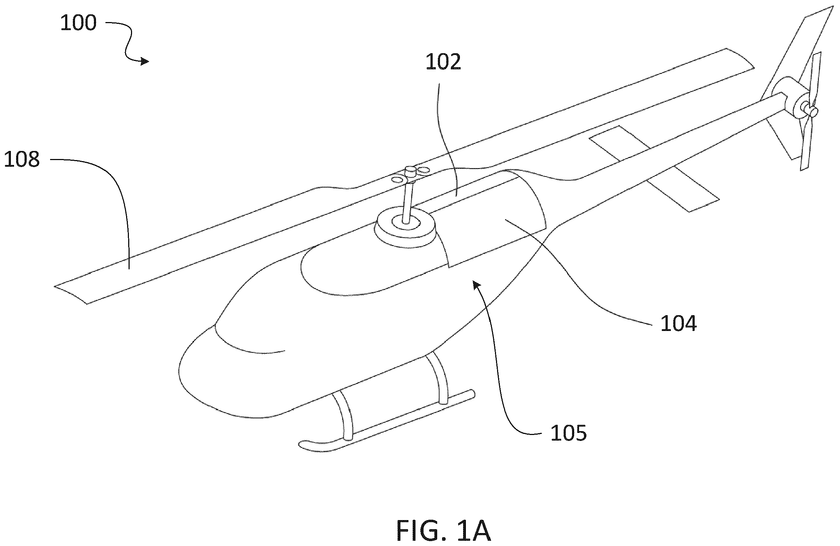

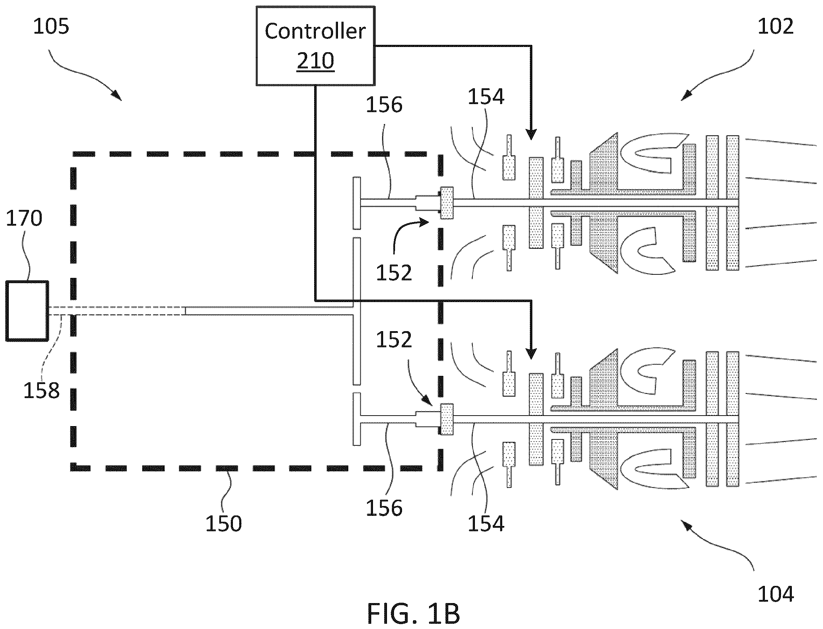

FIG. 1A depicts an exemplary multi-engine aircraft 100, which in this case is a helicopter. The aircraft 100 includes at least two gas turbine engines 102, 104. These two engines 102, 104 may be interconnected, in the case of the depicted helicopter application, by a common gearbox to form a multi-engine system 105, as shown in FIG. 1B, which drives a main rotor 108.

Turning now to Fig. 1B, illustrated is an exemplary multi-engine system 105 that may be used as a power plant for an aircraft, including but not limited to a rotorcraft such as the helicopter 100. The multi-engine system 105 may include two or more gas turbine engines 102, 104. In the case of a helicopter application, these gas turbine engines 102, 104 will be turboshaft engines. Control of the multi-engine system 105 is effected by one or more controller(s) 210, which may be Full Authority Digital Engine Control(s) (FADEC(s)), electronic engine controller(s) (EEC(s)), or the like, that are programmed to manage, as described herein below, the operation of the engines 102, 104 to reduce an overall fuel burn, particularly during sustained cruise operating regimes, wherein the aircraft is operated at a sustained (steady-state) cruising speed and altitude. The cruise operating regime is typically associated with the operation of prior art engines at equivalent part-power, such that each engine contributes approximately equally to the output power of the system 105. Other phases of a typical helicopter mission include transient phases like take-off, climb, stationary flight (hovering), approach and landing. Cruise may occur at higher altitudes and higher speeds, or at lower altitudes and speeds, such as during a search phase of a search-and-rescue mission.

More particularly, the multi-engine system 105 of this embodiment includes first and second turboshaft engines 102, 104 each having a respective transmission 152 interconnected by a common output gearbox 150 to drive a common load 170. In one embodiment, the common load 170 may comprise a rotary wing of a rotary-wing aircraft. For example, the common load 170 may be a main rotor 108 of the aircraft 100. Depending on the type of the common load 170 and on the operating speed thereof, each of turboshaft engines 102, 104 may be drivingly coupled to the common load 170 via the output gearbox 150, which may be of the speed-reduction type.

For example, the gearbox 150 may have a plurality of transmission shafts 156 to receive mechanical energy from respective output shafts 154 of respective turboshaft engines 102, 104. The gearbox 150 may be configured to direct at least some of the combined mechanical energy from the plurality of the turboshaft engines 102, 104 toward a common output shaft 158 for driving the common load 170 at a suitable operating (e.g., rotational) speed. It is understood that the multi-engine system 105 may also be configured, for example, to drive accessories and/or other elements of an associated aircraft. As will be described, the gearbox 150 may be configured to permit the common load 170 to be driven by either of the turboshaft engines 102, 104 or, by a combination of both engines 102, 104 together.

In the present description, while the aircraft conditions (cruise speed and altitude) are substantially stable, the engines 102, 104 of the system 105 may be operated asymmetrically, with one engine operated in a high-power "active" mode and the other engine operated in a lower-power (which could be no power, in some cases) "standby" mode. Doing so may provide fuel saving opportunities to the aircraft, however there may be other suitable reasons why the engines are desired to be operated asymmetrically. This operation management may therefore be referred to as an "asymmetric mode" or the aforementioned AOR. Such an asymmetric operation may be engaged for a cruise phase of flight (continuous, steady-state flight which is typically at a given commanded constant aircraft cruising speed and altitude). The multi-engine system 105 may be used in an aircraft, such as the helicopter 100, but also has applications in suitable marine and/or industrial applications or other ground operations.

Referring still to Fig. 1B, according to the present description the multi-engine system 105 is driving in this example the helicopter 100 which may be operated in the AOR, in which a first of the turboshaft engines (say, 102) may be operated at high power in an active mode and the second of the turboshaft engines (104 in this example) may be operated in a lower-power (which could be no power, in some cases) standby mode. In one example, the first turboshaft engine 102 may be controlled by the controller(s) 210 to run at full (or near-full) power conditions in the active mode, to supply substantially all or all of a required power and/or speed demand of the common load 170. The second turboshaft engine 104 may be controlled by the controller(s) 210 to operate at lower-power or no-output-power conditions to supply substantially none or none of a required power and/or speed demand of the common load 170. Optionally, a clutch may be provided to declutch the low-power engine.

Controller(s) 210 may control the engine's governing on power according to an appropriate schedule or control regime, as will be described in more detail below. The controller(s) 210 may comprise a first controller for controlling the first engine 102 and a second controller for controlling the second engine 104. The first controller and the second controller may be in communication with each other in order to implement the operations described herein. In some embodiments, a single controller 210 may be used for controlling the first engine 102 and the second engine 104.

In another example, the AOR of the engines may be achieved through the one or more controller's 210 differential control of fuel flow to the engines, as described in U.S. Patent Application Publication No. 2020/0049025. Low fuel flow may also include zero fuel flow in some examples.

Although various differential control between the engines of the engine system 105 are possible, in one particular embodiment the controller(s) 210 may correspondingly control fuel flow rate to each engine 102, 104 accordingly. In the case of the standby engine, a fuel flow (and/or a fuel flow rate) provided to the standby engine may be controlled to be between 70% and 99.5% less than the fuel flow (and/or the fuel flow rate) provided to the active engine. In the AOR, the standby engine may be maintained between 70% and 99.5% less than the fuel flow to the active engine. In some embodiments, the fuel flow rate difference between the active and standby engines may be controlled to be in a range of 70% and 90% of each other, with fuel flow to the standby engine being 70% to 90% less than the active engine. In some embodiments, the fuel flow rate difference may be controlled to be in a range of 80% and 90%, with fuel flow to the standby engine being 80% to 90% less than the active engine.

In another embodiment, the controller 210 may operate one engine (say 104) of the multiengine system 105 in a standby mode at a power substantially lower than a rated cruise power level of the engine, and in some embodiments at substantially zero output power and in other embodiments less than 10% output power relative to a reference power (provided at a reference fuel flow). Alternatively still, in some embodiments, the controller(s) 210 may control the standby engine to operate at a power in a range of 0% to 1% of a rated full-power of the standby engine (i.e. the power output of the second engine to the common gearbox remains between 0% to 1% of a rated full-power of the second engine when the second engine is operating in the standby mode).

In another example, the engine system 105 of Fig. 1B may be operated in an AOR by control of the relative speed of the engines using controller(s) 210, that is, the standby engine is controlled to a target low speed and the active engine is controlled to a target high speed. Such a low speed operation of the standby engine may include, for example, a rotational speed that is less than a typical ground idle speed of the engine (i.e. a "sub-idle" engine speed). Still other control regimes may be available for operating the engines in the AOR, such as control based on a target pressure ratio, or other suitable control parameters.

Although the examples described herein illustrate two engines, AOR is applicable to more than two engines, whereby at least one of the multiple engines is operated in a low-power standby mode while the remaining engines are operated in the active mode to supply all or substantially all of a required power and/or speed demand of a common load.

In use, the first turboshaft engine (say 102) may operate in the active mode while the other turboshaft engine (say 104) may operate in the standby mode, as described above. During operation in the AOR, if the helicopter 100 needs a power increase (expected or otherwise), the second turboshaft engine 104 may be required to provide more power relative to the low power conditions of the standby mode, and possibly return immediately to a high- or full-power condition. This may occur, for example, in an emergency condition of the multi-engine system 105 powering the helicopter 100, wherein the "active" engine loses power the power recovery from the lower power to the high power may take some time. Even in the absence of an emergency, it will be desirable to repower the standby engine to exit the AOR.

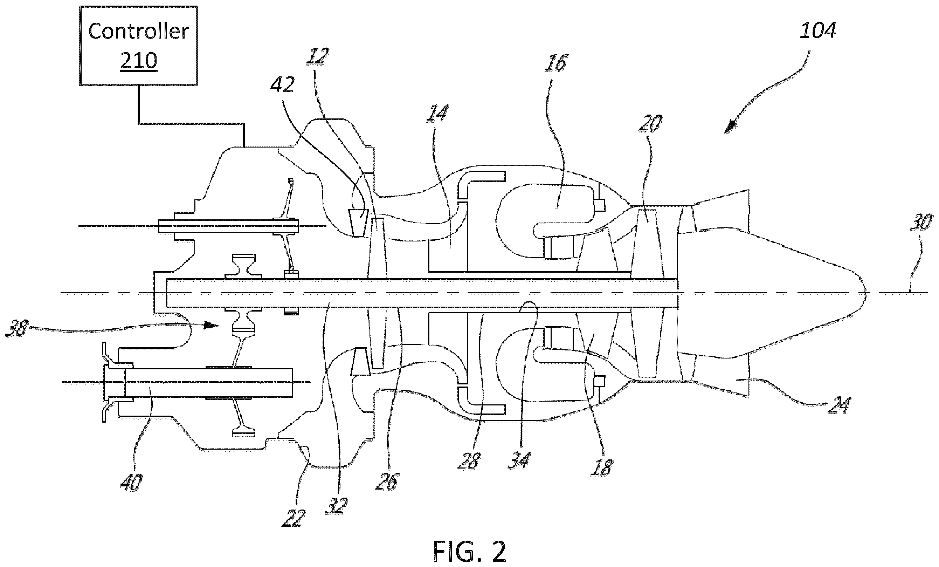

With reference to FIG. 2, the turboshaft engines 102, 104 can be embodied as gas turbine engines. Although the foregoing discussion relates to engine 104, it should be understood that engine 102 can be substantively similar to engine 104. In this example, the engine 104 is a turboshaft engine generally comprising in serial flow communication a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14, and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The engine 104 has multiple, i.e. two or more, spools which may perform the compression to pressurize the air received through an air inlet 22, and which extract energy from the combustion gases before they exit via an exhaust outlet 24. In the illustrated embodiment, the engine 104 includes a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a speed proportional to the low pressure turbine section 20 speed. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The engine 104 may include a transmission 38 driven by the low pressure shaft 32 and driving a rotatable output shaft 40. The transmission 38 may vary a ratio between rotational speeds of the low pressure shaft 32 and the output shaft 40.

The engine 104 comprises one or more variable geometry mechanism (VGM), such as inlet guide vanes (IGVs) 42 moveable for directing air into the compressor section 12 (e.g. compressor inlet guide vanes). For example, the IGVs 42 may comprise low-pressure compressor inlet guide vanes, mid-pressure compressor inlet guide vanes, and/or high-pressure compressor inlet guide vanes. It should however be understood that the VGM may in some embodiments consist of outlet guide vanes for directing air out of the compressor section 12, variable stator vanes for directing incoming air into rotor blades of the engine 104, variable nozzles, handling bleed valves, and the like.

As described hereinabove, control of the operation of the engine 102 can be effected by one or more control system, for example the controller 210. The controller 210 can modulate a fuel flow (Wf) provided to the engine 102, the position and/or orientation of the VGMs within the engine 104, a bleed level of the engine 104, and the like. In some embodiments, the controller 210 is configured for controlling operation of multiple engines, for instance the engines 102 and 104. For example, the controller 210 can be provided with one or more FADECs or similar devices. Each FADEC can be assigned to control the operation of one or more of the engines 102, 104. Additionally, in some embodiments the controller 210 can be configured for controlling operation of other elements of the aircraft 100, for instance the main rotor 108.

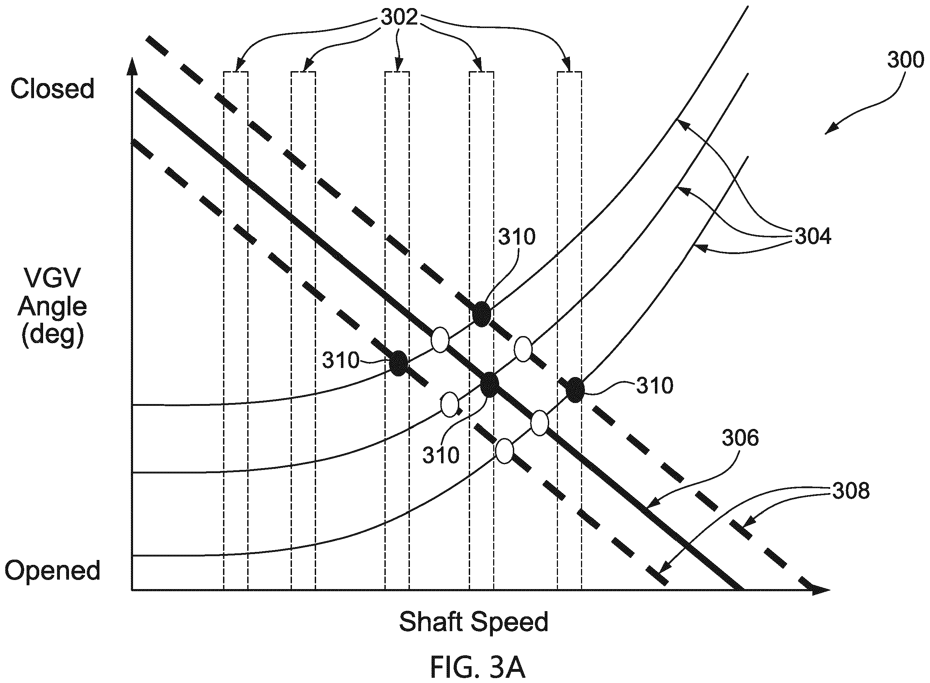

With reference to Fig. 3A, when operating the engine 104, there may be certain engine speeds at which it is undesirable to have the engine dwell. These speeds are referred to herein as restricted speed ranges 302. In some embodiments, the restricted speed ranges 302 are speeds at which mechanical vibrations and/or aerodynamic instabilities are susceptible sources of excitation to certain engine component dynamic modes, such as resonant frequencies, non-integral vibrations, flutter, and the like. Components such as blades, shafts, accessories, vanes, and the like, may be affected by dynamic modes. Alternatively or in combination therewith, there may be other reasons for imposing restricted speed ranges 302 on an engine. Engine speeds, as illustrated along the x-axis of the graph 300, can vary significantly based on fuel flow levels, operating conditions (altitude, outside air temperature, Mach number/airspeed, etc), engine parameters (engine inlet pressure, engine inlet temperature, installation effects (i.e. aircraft system accessory load and/or bleed consumption from the engine, aircraft inlet/exhaust pressure losses, aircraft inlet temperature rise, inlet distortion, etc.), etc), and engine conditions (engine deterioration, engine to engine variations, etc). These variations are represented by the family of curves 304. Engine speeds can also vary as a function of variable geometry mechanism positioning, which may itself be affected by control system accuracies. Curve 306 illustrates a typical schedule for IGVs of an engine, while curves 308 represent the effects of vane and other system inaccuracies. It may be desirable to minimize the time the engine operates at speeds falling in restricted speed ranges 302, such as operating points 310.

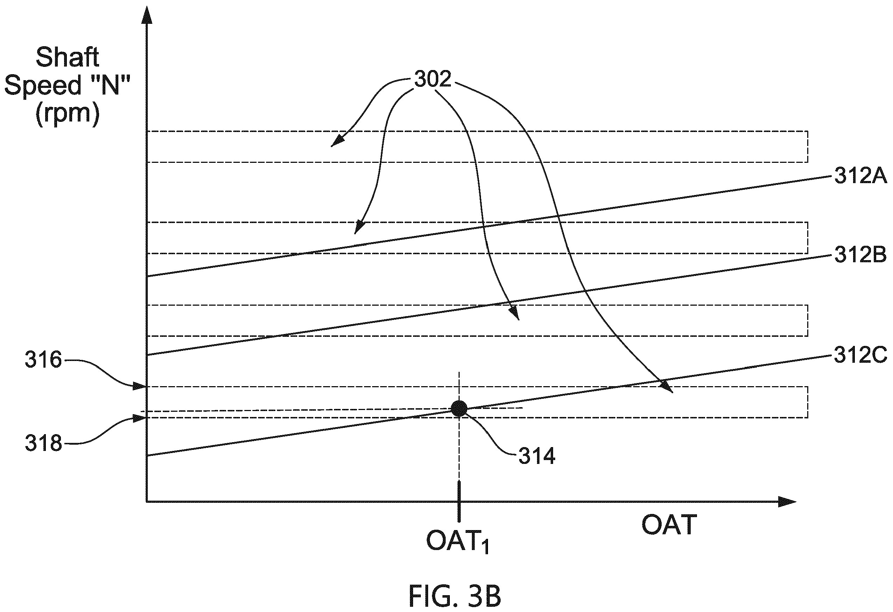

Fig. 3B illustrates an example of restricted speed ranges 302 vs outside air temperature (OAT), for different aircraft altitudes (312A, 312B, 312C). For a given altitude 312C, when the outside air temperature corresponds to OAT₁, an engine speed 314 falls within a restricted speed range 302.

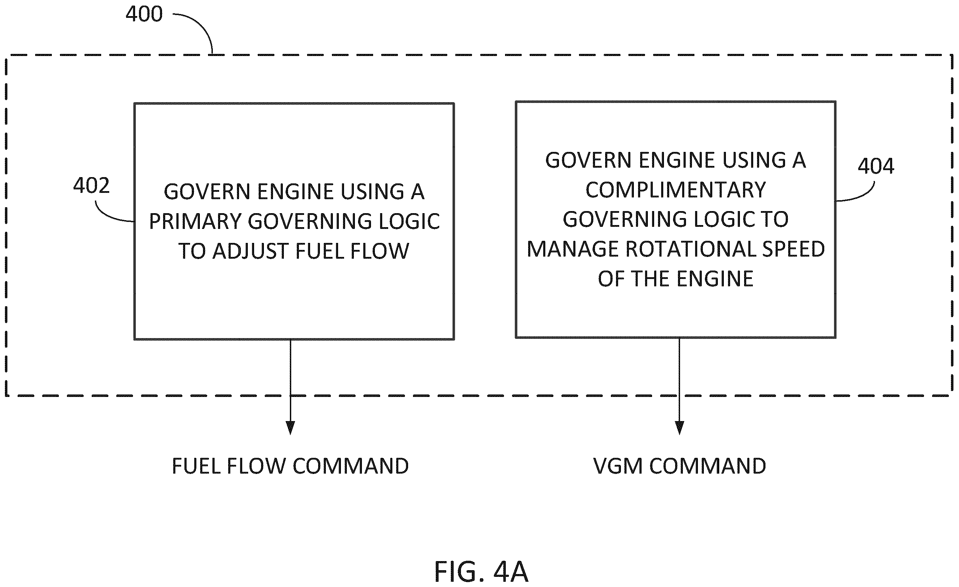

With reference to Fig. 4A, there is illustrated a method 400 for operating a gas turbine engine, such as engine 104, in order to avoid the restricted speed range(s) 302. In some embodiments, the gas turbine engine is operating in a standby mode, at very low or no power. At step 402, the engine is governed based on a primary governing logic to adjust fuel flow to the engine. The primary governing logic is used as the main control loop to control the engine. The output to the primary governing logic is a fuel flow command. A secondary or complementary governing logic is also used, as per step 404, in addition to and concurrently with the primary governing logic. The complementary governing logic is used to manage avoid restricted speed range(s) (or ensure operation only at allowed speeds) by generating a VGM command to adjust at least one VGM of the engine. The VGM may be a guide vane, an engine bleed-off valve, a variable exhaust nozzle, or any other VGM having a position that when changed has an impact on the rotational speed of the engine. The method 400 thus provides engine governance with two separate and independent ways to exert control over the engine. The first way is the fuel flow, which is used to provide the desired power to the engine. The second way is the position of the VGM(s), which is used to avoid the restricted speed ranges without affecting the power level of the engine.

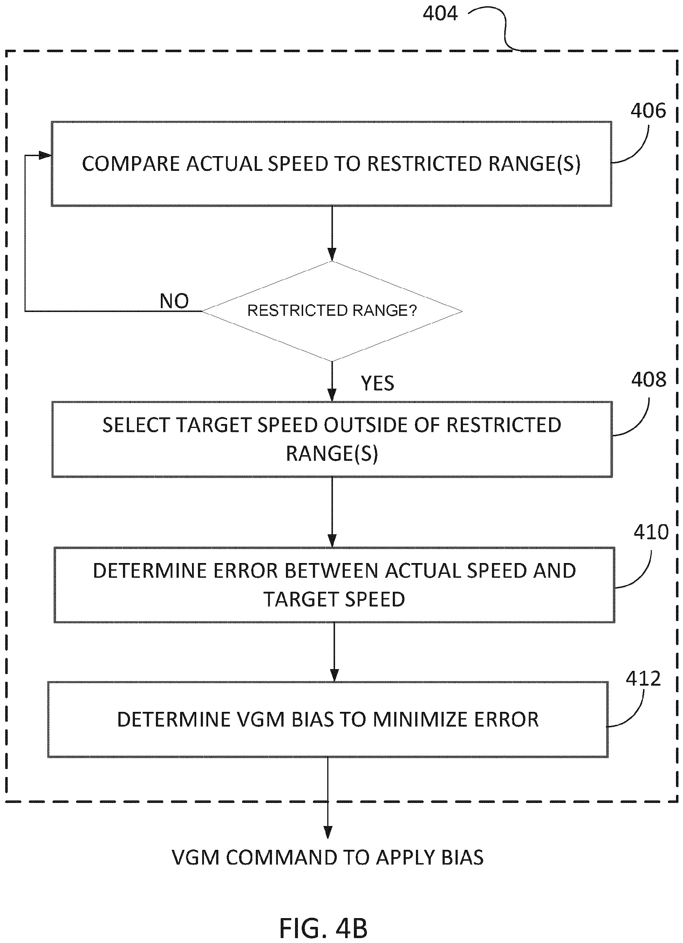

Fig. 4B illustrates an example of governing the engine based on the complementary governing logic to avoid restricted speed ranges of the engine, as per step 404. At step 406, an actual rotational speed of the engine is compared to the restricted range(s). It will be understood that step 406 may also implemented as comparing the actual speed to allowed speeds. When the actual speed falls within a restricted speed range (or does not fall within an allowed speed range), a target speed outside of the restricted speed range (or inside an allowed speed range) is selected at step 408. At step 410, an error between the actual speed and the target speed is determined. At step 412 a bias to the current position(s) of the VGM(s) is determined so as to minimize the error between the target speed and the actual speed. In other words, a new position for the VGM(s) is determined so as to modify the actual speed of the engine towards the target speed of the engine.

The speed target may be obtained from a target schedule. In some embodiments, the speed target is outside of the restricted speed range in which the actual speed falls. In some embodiments, the speed target is on a limit of the restricted speed range in which the actual speed falls. In some embodiments, the target speed is a specific value. In some embodiments, the target speed is a zone, such as (X > target speed > Y rpm).

In some embodiments, steps 408, 410 and 412 of the complementary governing logic 404 are only performed when the actual speed falls within a restricted speed range. Alternatively, steps 408, 410 and 412 are performed within the context of governing the engine with the complementary governing logic and step 406 may be omitted. In other words, a target speed is always set and the complementary governing logic 404 seeks to meet the target speed at all times.

The VGM command may be for one or multiple VGMs. For example, there may be multiple variable guide vanes that can be adjusted in order to manage the rotational speed of the engine. Step 412 may comprise selecting a VGM from multiple available VGMs in order to minimize the error between the target speed and the actual speed. Alternatively, step 412 is dedicated to a given VGM of the engine, which is positioned in response to the error as determined at step 410.

Referring back to Fig. 3B, the restricted speed ranges 302 may be defined by an upper limit 316 and a lower limit 318. In some embodiments, the target speed is set to the upper limit 316 or the lower limit 318 of the range 302 in which it falls. In some embodiments, the target speed set to the upper limit 316 of the restricted speed range 302 when the actual speed is in an upper half of the restricted speed range 302, and is set to the lower limit 318 of the restricted speed range 302 when the actual speed 314 is in a lower half of the restricted speed range 302. Other embodiments for selecting a value for the target speed may also be used. As used herein, the expression "speed range" refers to any number of values, including a single value of a given unit such as RPM.

In some embodiments, the engine 104 is a single spool engine. In some embodiments, the engine is a multi-spool engine, as illustrated in the example of Fig. 2. There may be one or more VGM per spool. In some embodiments, the complementary governing logic is applied to the low pressure spool 26 of the engine 104. As such, the target speed of the engine corresponds to a target rotational speed of the low pressure spool 26, and the actual rotational speed corresponds to an actual rotational speed of the low pressure spool 26.

In some embodiments, the complementary governing logic is applied to the low pressure spool 26 and to the high pressure spool 28 of the engine 104. A first complementary logic is applied to the low pressure spool 26, such that the rotational speed corresponds to the rotational speed of the low pressure spool 26. A second complementary logic is applied to the high pressure spool 28, such that the rotational speed corresponds to the rotational speed of the high pressure spool 28. The complementary logic may be applied to any additional spools of the engine.

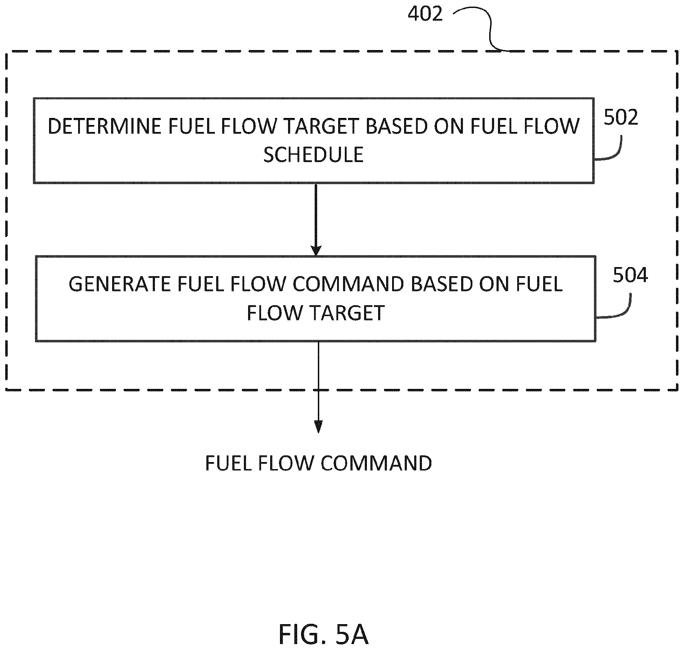

Referring to Fig. 5A, there is illustrated an example embodiment of governing the engine with the primary governing logic to adjust the fuel flow of the engine, as per step 402. In this example, the primary governing logic is an open-loop governing scheme, whereby a fuel flow target is determined at step 502 based on a fuel flow schedule, and a fuel flow command is generated at step 504 based on the fuel flow target. The fuel flow schedule may define the fuel flow target as a function of one or more parameter, such as aircraft altitude, outside air temperature, and the like. The fuel flow target is determined using measured and/or synthesized parameters during engine operation.

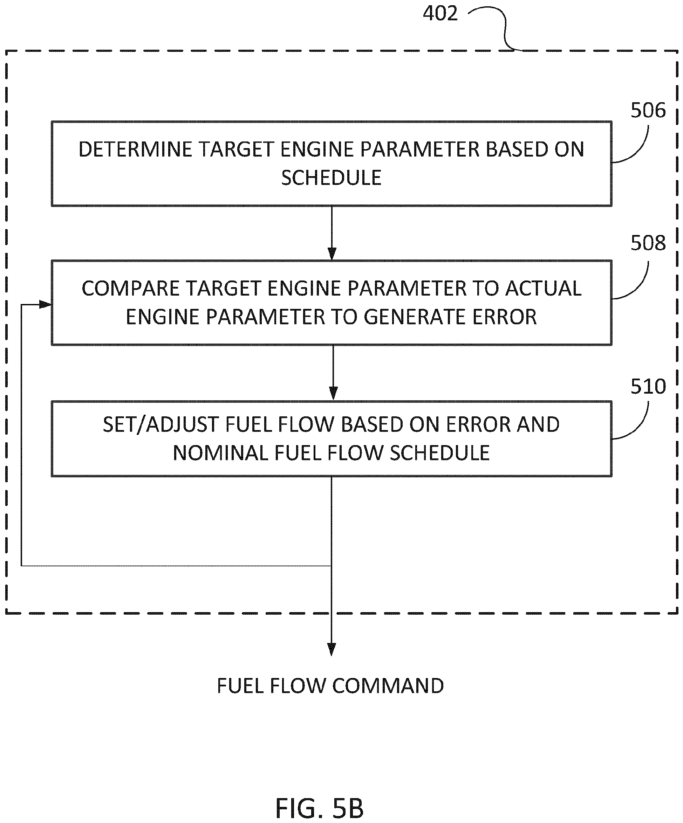

Referring to Fig. 5B, there is illustrated another example embodiment of governing the engine with the primary governing logic to adjust the fuel flow of the engine, as per step 402. In this example, the primary governing logic is a closed-loop scheme based on an error between an actual engine parameter and a target engine parameter. The engine parameter may be any parameter relevant to engine operation and for which it is desired to set as a primary target for governing, such as but not limited to high pressure spool speed, shaft horse power, low pressure spool speed, compressor pressure ratio, inlet or exhaust turbine temperature, and the like.

At step 506, a target engine parameter is determined based on a schedule, which may depend on one or more other engine parameter or on one or more operational parameters, such as altitude, outside air temperature, and the like. At step 508, the target engine parameter is compared to an actual engine parameter, which may be measured or synthesized, in order to generate an error. At step 510, the fuel flow command is set and/or adjusted based on the error and a nominal fuel flow schedule. Other primary governing logic schemes may also be used in conjunction with the complementary governing logic as described herein.

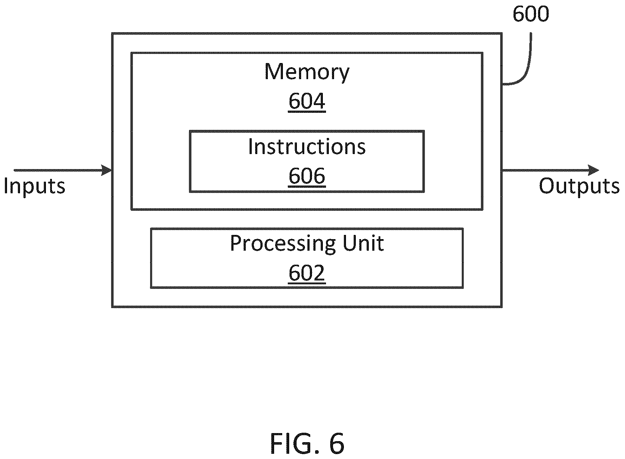

The method for operating the gas turbine engine to avoid restricted speed ranges may be performed by one or more engine controller, such as controller 210. In some embodiments, the controller 210 is implemented in one or more computing device 600, as illustrated in Fig. 6. For simplicity only one computing device 600 is shown but the system may include more computing devices 600 operable to exchange data. The computing devices 600 may be the same or different types of devices. Note that the controller 210 can be implemented as part of a full-authority digital engine controls (FADEC) or other similar device, including electronic engine control (EEC), engine control unit (ECU), and the like.

The computing device 600 comprises a processing unit 602 and a memory 604 which has stored therein computer-executable instructions 606. The processing unit 602 may comprise any suitable devices configured to implement the method 400 such that instructions 606, when executed by the computing device 600 or other programmable apparatus, may cause the functions/acts/steps performed as part of a method 400 as described in Fig. 4A to be executed. The processing unit 602 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 604 may comprise any suitable known or other machine-readable storage medium. The memory 604 may comprise non-transitory computer readable storage medium, for example, but not limited to, an electronic, magnetic, optical, electromagnetic, infrared, or semiconductor system, apparatus, or device, or any suitable combination of the foregoing. The memory 604 may include a suitable combination of any type of computer memory that is located either internally or externally to the device 600, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 604 may comprise any storage means (e.g., devices) suitable for retrievably storing machine-readable instructions 606 executable by processing unit 602.

The method 400 described herein may be implemented in a high level procedural or object oriented programming or scripting language, or a combination thereof, to communicate with or assist in the operation of a computer system, for example the computing device 600. Alternatively, the method 400 may be implemented in assembly or machine language. The language may be a compiled or interpreted language. Program code for implementing the method 400 may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the method 400 may also be considered to be implemented by way of a non-transitory computer-readable storage medium having a computer program stored thereon. The computer program may comprise computer-readable instructions which cause a computer, or more specifically the processing unit 602 of the computing device 600, to operate in a specific and predefined manner to perform the functions described herein, for example those described in the method 400.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

The embodiments described in this document provide non-limiting examples of possible implementations of the present technology. Upon review of the present disclosure, a person of ordinary skill in the art will recognize that changes may be made to the embodiments described herein without departing from the scope of the invention as set out in the claims. For example, the VGMs may be range limited to +/- 5 degrees, +/- 10 degrees, +/- 1%, etc, from a nominal position. In another example, the method 400 may be triggered only in certain circumstances, such as when the engine is operating under certain conditions or shows a certain level of deterioration. Yet further modifications could be implemented by a person of ordinary skill in the art in view of the present invention, which modifications would be within the scope of the appended claims.

## Claims

1. A method for operating a gas turbine engine (102, 104), the method comprising:
governing the engine (102, 104) with a primary governing logic (402) to adjust a fuel flow to the engine (102, 104); and
governing the engine (102, 104) with at least one complementary governing logic (404) concurrently to the primary governing logic (402), the at least one complementary governing logic (404) adjusting a position of at least one variable geometry mechanism (VGM) (42) of the engine (102, 104) to prevent a rotational speed of the engine (102, 104) from operating in one or more restricted speed range (302).

2. A system for operating a gas turbine engine (102, 104), the system comprising:
at least one processing unit (602); and
a non-transitory computer-readable medium (604) having stored thereon program code executable by the at least one processing unit (602) for:
governing the engine (102, 104) with a primary governing logic (402) to adjust a fuel flow to the engine (102, 104); and
governing the engine (102, 104) with at least one complementary governing logic (404) concurrently to the primary governing logic (402), the at least one complementary governing logic (404) adjusting a position of at least one variable geometry mechanism (VGM) (42) of the engine (102, 104) to prevent a rotational speed of the engine (102, 104) from operating in one or more restricted speed range (302).

3. The method or system of claim 1 or 2, wherein the restricted speed range (302) is defined by an upper limit (316) and a lower limit (318), and wherein the target speed is set to one of the upper limit (316) and the lower limit (318).

4. The method or system of any of claims 1 to 3, wherein the target speed is set to the upper limit (316) of the restricted speed range (302) when an actual speed of the engine (102, 104) is in an upper half of the restricted speed range (302), and the target speed is set to the lower limit (302) of the restricted speed range (302) when the actual speed is in a lower half of the restricted speed range (302).

5. The method or system of any preceding claim, wherein the at least one complementary governing logic (404) is applied to a low pressure spool (26) of the engine (102, 104).

6. The method or system of any of claims 1 to 4, wherein the at least one complementary governing logic (404) comprises a first complementary governing logic (404) applied to a low pressure spool (26) of the engine (102, 104) and a second complementary governing logic (404) applied to a high pressure spool (28) of the engine (102, 104).

7. The method or system of any preceding claim, wherein the gas turbine engine (102, 104) is in an aircraft (100) having two or more engines (102, 104) operated in an asymmetric operating regime, where a first of the engines (102) is in an active mode to provide motive power to the aircraft (100) and a second of the engines (104) is in a standby mode to provide substantially no motive power to the aircraft (100), and wherein the method is applied when the gas turbine engine (102, 104) is operating in the standby mode.

8. The method or system of any preceding claim, wherein the at least one complementary governing logic (404) comprises:
selecting a target speed outside of the one or more restricted speed range (302);
determining an error between an actual speed of the engine (102, 104) and the target speed;
determining a bias via for the at least one VGM (42) to minimize the error; and
issuing a command to apply the bias to the at least one VGM (42).

9. The method or system of any preceding claim, wherein the at least one complementary governing logic (404) is invoked when an actual speed of the engine (102, 104) falls within the one or more restricted speed range (302).

10. The method or system of any of claims 1 to 7, wherein adjusting the at least one VGM (42) comprises applying a bias to a nominal VGM position schedule.

11. The method or system of claim 10, wherein the bias is capped at a maximum value.
